# EUROPEAN PATENT APPLICATION

(11) **EP 1 752 900 A1**
(43) Date of publication of application: **14.02.2007**
(21) Application number: 05254468.1
(22) Date of filing: 18.07.2005
(51) Int. Cl.: G06F 21/00

(54) **Website content access control system**

(71) Applicant: Capricorp Limited, Gibraltar (GI)
(72) Inventor: Buckler, Jeb, Monte-Carlo, MC 98000 (MC)
(74) Representative: Finnie, Peter John

(57) **Abstract**

A system and method for controlling access to secure chargeable content on a hosted website comprises a client configurable Authentication and Configuration Component (ACC) installed on the web server and in communication with a Remote Authentication Service Provider (RASP). The consumer is prompted by the website to contact the RASP by telephoning or by sending SMS text message containing a code to a specified number and, in return, receives an access password from the RASP by telephone or in an SMS text message. The access password is generated by the RASP in dependence on configuration settings supplied by the website owner through the ACC. The consumer enters the received access password into the website validation page, which then obtains validation of the password from the RASP via the ACC. Providing the password is validated, the consumer is granted access to the secure content. In return, the website owner receives from the RASP a proportion of a payment received by the RASP from the mobile telephone service operator for each access password request made by the consumer.

## Description

### Field of the Invention

The present invention relates to a method and system for controlling access to remote content, such as online electronic information provided over the Internet, and for handling the payment transactions accrued to the website or content owner for each password request.

### Background to the Invention

The Internet provides access to a huge amount of information, which may be accessed via hosted websites or other means. Access to much of the available data is unrestricted, but there are many situations where it is desirable to control or limit access. This is particularly true of website content, in which case the website publisher or content owner may require authentication of the party seeking access or require payment before providing access. Often, an authentication procedure is undertaken as part of authorizing a payment. A further associated issue is that of ensuring security for information exchanged between the parties

A website publisher or content owner has various options for the charging of secured content. The most common way is to accept credit cards by using a third-party merchant service integrated into the website. Other methods use "PayPal" or an electronic purse facility where the consumer has already charged their account using a credit card. However, it can often be time consuming and complicated to integrate websites with these systems and many users still refuse to use credit cards over the Internet. Using credit cards can also be an overwhelming process for the user when making a purchase for small amounts of between 0.50 GBP and 5.00 GBP. There is also a danger that the user's computer may be vulnerable and credit card or other information may be intercepted by software that, for example, may log keystrokes.

In some systems, obtaining access to a remote service or content may involve a third party. US2002/0138450A1 discloses a process by which a consumer initiates a session with a merchant website that proposes payment by electronic single use payment means and, on acceptance by the consumer, initiates a separate session with a third party for making a payment. To carry out payment, a number identifying the single use payment means is sent from the third party financial entity to the consumer by a separate communication means, such as telephone. The consumer uses this to pay for a purchase at the merchant website, and the number is forwarded to the third party for authentication. The third party also determines the duration of use of the single use payment means.

In other systems, access to a remote service or content may be mediated purely by means of the server hosting the website. GB2379040A discloses a process whereby, in response to a user typing an URL into a web-browser, the server hosting the website returns a login page to the user's browser. The user logs in with a user name and password and is authenticated by the server, which then sends a text message to the user's mobile phone containing a one-time password. The server also sends a form to the user's browser into which the user enters the password to gain access to the remote service once the one-time password has been validated.

GB2391646A discloses a process in which a username or password required for access to a vendor's secure web page is a user's telephone number. The vendor displays the vendor's telephone number on the web page and the user telephones or texts to this number to provide the user telephone number to the vendor. A further vendor ID code may be provided on the web page, to be entered by the user along with the telephone number in a username/password combination. Access to the web page is granted to the user once the vendor has validated the username/password submitted.

The above processes all address issues relating to controlling access to a remote website and obtaining payment where appropriate. However, there is a need for a more flexible and secure system by which a user may gain access to secure content on a client website in a manner determined by the client and by which the client can receive payment for granting access to the content.

### Summary of the Invention

According to a first aspect of the present invention there is provided a client configurable component for a web server hosting a client website, the component adapted to mediate access by a consumer to restricted content on the client website by communicating to an authentication server hosting a remote authentication service a password received by the hosted client website from the consumer and communicating validation of the password received from the authentication server to the website for permitting access by the consumer to the restricted content in a manner determined by the client configuration of the component.

Preferably, the component is configurable by the client to provide desired password and restricted content access options.

Preferably, the client configurable component is adapted to mediate access by a consumer to restricted content on a plurality of client websites.

The Authentication and Configuration Component (ACC) is installed on Web Servers (dedicated or shared web server) and provides the front-end tools that the website owner uses to configure their password options and password payment amounts under their account. The ACC connects to a Remote Authentication Service Provider to update all account and configuration details, and also provides the website owner with the ability to validate password received from users.

According to a second aspect of the present invention there is provided a website content access system comprising:
at least one client configurable component according to the first aspect, the or each component located on a web server hosting at least one client website having secured chargeable content; and,
an authentication server hosting a remote authentication service, the service comprising:
   a communications interface in communication with the client configurable component;
   at least one data store containing an indication of the at least one website location and client configuration settings for the website;
   means to receive a code over a telephone link from a consumer;
   a password generation engine adapted to generate an access password in dependence on the received code and the client configuration settings;
   means to send the generated access password over a telephone link to the consumer; and
   a processing system adapted to respond to a request from the at least one client configurable component to determine the validity of a password.

Preferably, the code comprises a text string sent by a Short Messaging Service (SMS) over the telephone link. Preferably, the access password comprises a text string sent by a Short Messaging Service (SMS) over the telephone link.

It is preferred that the authentication service is enabled to receive payment from the operator of the telephone link for each password request and to forward a proportion of the payment to the client.

The access password may be a one-time password or a multiple use password. Methods for generating such passwords will be known to those skilled in the art.

The Remote Authentication Service Provider (RASP) provides the back-end third-party service, by way of one or more databases and a series of software modules, that also has a password generation engine. RASP is integrated with the GSM and other mobile phone networks for the receiving and sending of SMS text messages, and records all transactions and requests. RASP is also Internet-enabled for incoming configuration and password validation requests from any online Authentication and Configuration Component (ACC).

The present invention thus provides a secure flexible system that allows payments to be taken from the consumer's mobile phone account when exchanging data with the Remote Authentication Service Provider (RASP), in exchange for providing a password that can be used to access secure content on the Internet, and to provide the web server with the component that can be used for configuring passwords and can validate passwords requests.

According to a third aspect of the present invention there is provided a method of controlling user access to secured chargeable content on a hosted website comprising the steps of:
configuring settings for access to a secured web page or content on a website area that is password protected;
receiving a request from a consumer for access to a secured web page or content;
displaying instructions to the consumer for obtaining an access password, including a telephone number for a remote authentication service provider from which to obtain the access password;
receiving a password from the consumer;
requesting validation of the received password from the remote authentication service provider; and
allowing the consumer access to the secured web page or content in dependence on the configured settings once the password has been validated.

Preferably, the method further comprises the step of transmitting the website location and the access configuration settings to the remote authentication service provider.

Preferably, the method further comprises the step of receiving payment from the remote authentication service provider in respect of each access password request made by a consumer.

The above method allows for secure controlled access to website content in a manner that is configurable by a website owner and is integrated with a third party which deals with the generation and authentication of access passwords and which forwards payments for the providing access to the secure content.

According to a fourth aspect of the present invention there is provided a method of controlling user access to secured chargeable content on a client website hosted by a web server in which a remote authentication service provider performs the steps of:
receiving a code from a consumer over a telephone link;
accessing a database to obtain configuration settings for the website location;
generating an access password in dependence on the received code and the configuration settings;
sending the access password to the consumer over the telephone link;
receiving a request from a configurable component on the web server to validate a password received by the client website from the consumer;
comparing the received password with the access password; and
validating the received password to the configurable component if the two passwords are the same.

Preferably, the code is a text string received by short messaging service (SMS).

Preferably, the access password is sent to the consumer by short messaging service (SMS).

Preferably, the method further comprises the steps of receiving payment from the operator of the telephone link for sending the access password to the consumer over the telephone link and forwarding a proportion of the payment to the owner of the client website.

Thus, in the present invention, a consumer requests a password from the Remote Authentication Service Provider (RASP) using their mobile phone to send an SMS or call a number. RASP receives the SMS request, records the transaction details to a database, generates a password according to the configured profile, and sends the password to the consumer's mobile phone, preferably as an SMS. The consumer then enters the password into the website to access the secured content and the website uses the Authentication and Configuration Component (ACC) object installed on the web server to authenticate the password with RASP. The RASP records the details of the authentication request and validates the password to the ACC object. If the ACC component confirms validation of the password, the website allows the consumer to access the secured content.

It will be seen that, by combining the RASP and ACC technologies in this method, one-time passwords can be used to secure content and avoid unauthorised access, the consumer is provided with an easy and secure payment method, and payments can be collected from the mobile phone operators on behalf of the website owners. In this way, the present invention provides a system and method, which are beneficial to all the parties involved.

### Brief Description of the Drawings

Examples of the present invention will now be described in detail with reference to the accompanying drawings, in which:
Figure 1 shows a first consumer device for accessing a website that is hosted on a web server having an Authentication and Configuration Component (ACC) installed;
Figure 2 shows a second consumer device in communication with a Remote Authentication Service Provider (RASP) over a communication link;
Figure 3 shows the web server with ACC object in communication with both the RASP and the first consumer device; and,
Figure 4 shows a flow diagram illustrating the steps taken to obtain access to secure content on a hosted client website.

### Detailed Description

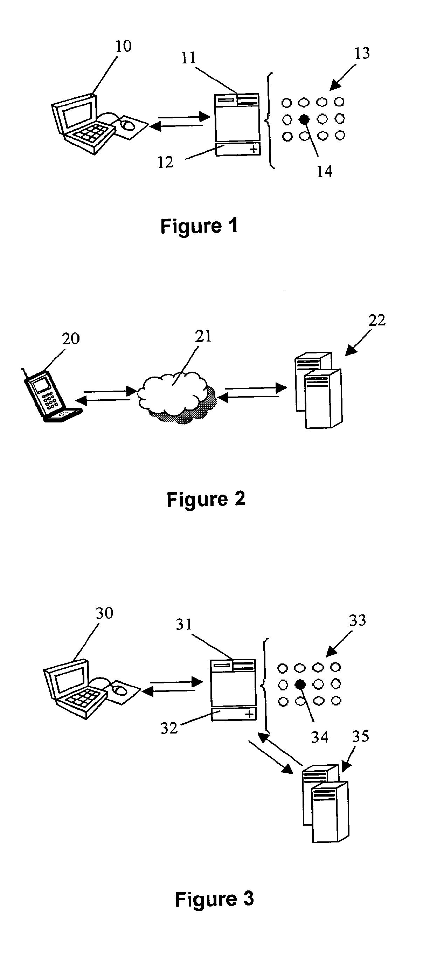

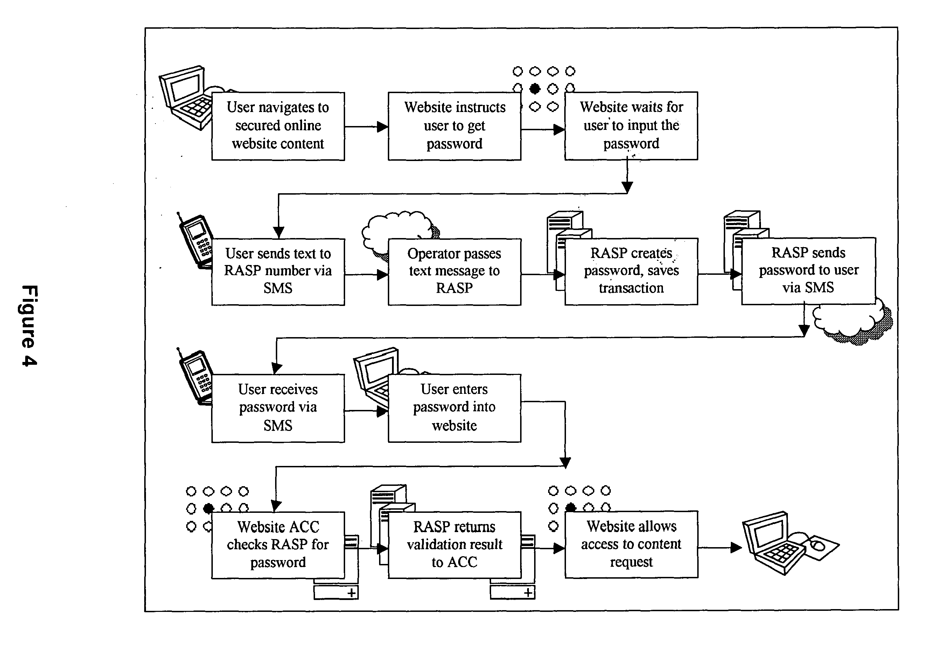

Figure 1 shows a consumer device 10 (a personal computer) accessing a website 14 that is hosted on a web server 11 that has an Authentication & Configuration Component (ACC) 12 installed. Rather than a dedicated web server for a single client website, the web server 11 may be a shared resource hosting websites 13 for many clients. The ACC object is capable of managing the controlled access to all of these websites. Moreover, the ACC object installed on the web server is independently configurable by each client to specify access options to the client's website. When a consumer attempts to access information or content on a web page that is secured and protected by a password, the consumer may be informed that the content is secure and can only be accessed using a password or username/password combination that is to be generated according to a method that is the subject of the present invention.

In the present invention, when a consumer attempts to access such content, the secure web page to which access is desired informs the consumer that in order to access the web content they must enter a password and provides the instructions on how to receive a password using their mobile phone. Figure 2 illustrates the mechanism by which the consumer requests and receives an access password. Firstly, the consumer is told that, in order to obtain a valid password, they must send an SMS text message containing a specific text string to a specific telephone number. Following these instructions from the website, the consumer sends the specific text from his/her mobile phone 20 using an SMS text message to the specific number. The specific telephone number can be one of many that are supplied by a Remote Authentication Service Provider (RASP) and enables the RASP to receive and process the SMS text messages electronically. The mobile phone network operator routes the message to the RASP number over the communication network 21.

The remote authentication service may be hosted on one or more authentication servers 22 and is in communication with the ACC object on the web server. Of course, the remote authentication service may be enabled to handle requests from multiple ACC objects each installed on a web server hosting multiple websites. RASP receives the SMS text message electronically and interprets the content of the message, the specific text, to determine uniquely the website location. The website location information can then be used to look up the website account and the configuration settings for the website location, which are stored on a database. The configuration settings are passed to the password generation engine, which generates a password in dependence on the configuration settings. The generated access password is sent to the consumer's mobile phone via an SMS text message. The RASP stores the transaction and payment details associated with the website account.

Figure 3 shows the subsequent stage of the process in which the consumer submits the access password received from RASP into the website page and submits the request to validate the entry. A website validation page of the website 34 hosted by the web server 31 uses the Authentication and Configuration Component (ACC), which is also hosted on the web server 31, as an object within the validation process. The website validation page references the ACC object 32 in a script to validate the password. The ACC object 32 opens a secure connection to the RASP server 35 and submits a request to validate the password. The RASP records the transaction and returns the validation result together with other information relating to the transaction. The ACC object 32 makes a dataset result available to the website script for further processing. If the validation request is valid then the website allows the consumer access to the secured content that the consumer has requested.

Figure 4 shows a flow diagram illustrating, in a sequential manner, all the steps of the present invention from the initial navigation by a consumer on their PC browser to a client website all the way through the password request and validation process to the final step of granting access to the secure content. The diagram clarifies the steps performed by the various system components shown in Figures 1 to 3.

Of course, there are many variations possible within the structure of the controlled access process. The type of password and access that a consumer is permitted to have may vary. For instance, a time limit on the amount of time for which the client may access the secure content may be provided. Alternatively, the password can be configured as a one-time password that can be used at the website only once. Techniques for generating such passwords are well known to the person skilled in the art.

The consumer may provide personal information to the RASP, which can be stored on a database and associated with the consumer mobile phone number. Such information may be forwarded to the website owner for use in providing an enhanced or more personalized service to the consumer, depending on the particular type of website service or content that is available.

A key benefit of the proposed system is that the consumer is charged for access to the secure content through the consumer's telephone operator. In the case of the telephone being a mobile phone and the password being requested and sent by SMS text message, the mobile phone operator charges the consumer for sending the SMS text message to RASP. RASP then receives payment from the mobile phone operator. In the case where the password is provided to the consumer by telephone, the number for RASP could be a premium rate number from which RASP receives payment from the telephone operator for each call that is made. Multiple telephone numbers can be used by RASP (e.g. for premium rate and SMS text messaging) to enable different charging levels or differentiate call configurations. The RASP will typically pass on a proportion of the money received from the telephone operating company to the owner of the client website by way of payment for granting the consumer access to secure content.

In the case of a shared hosting solution, where multiple websites exist on the same web server, it is possible that the shared hosting service provider refuses to install the ACC on the web server. In this case, specific interfaces can be provided to the website owner in the form of HTTP requests and responses to and from RASP that the website owner can use in their website scripts. In this embodiment, the client configurable component effectively becomes an interface integrated within the website rather than a separate ACC object installed on the web server.

The present invention therefore enables simple chargeable access to secure web pages in a client configurable manner using communication means separate from the Internet to charge consumers for accessing the content. The system addresses concerns of both the consumer and business organizations alike. For the consumer, the objective is to allow access to chargeable content on the Internet using a secure means of payment. For the website owner, the objective is to provide a method to configure and authenticate the password options, and also the means to receive a payment for each password that has been requested by the consumer.

## Claims

1. A client configurable component (12) for a web server (11) hosting a client website (14), the component (12) adapted to mediate access by a consumer to restricted content on the client website by communicating to an authentication server (22) hosting a remote authentication service a password received by the hosted client website (14) from the consumer and communicating validation of the password received from the authentication server (22) to the website (14) for permitting access by the consumer to the restricted content in a manner determined by the client configuration of the component (12).

2. A configurable component according to claim 1, wherein the component (12) is configurable by the client to provide desired password and restricted content access options

3. A configurable component according to claim 1 or claim 2, wherein the component (12) is an interface that is integrable within the website (14).

4. A configurable component according to claim 1 or claim 2, wherein the component (12) is adapted to mediate access by a consumer to restricted content on a plurality of client websites (13) hosted by the web server (11).

5. A website content access system comprising:
at least one client configurable component (12) according to any of claims 1 to 4, the or each component (12) located on a web server (11) hosting at least one client website (14) having secured chargeable content; and,
an authentication server (22) hosting a remote authentication service, the service comprising:
a communications interface in communication with the or each client configurable component;
at least one data store containing an indication of the at least one website location and client configuration settings for the website;
means to receive a code over a telephone link from a consumer,
a password generation engine adapted to generate an access password in dependence on the received code and the client configuration settings,
means to send the generated access password over a telephone link to the consumer; and
a processing system adapted to respond to a request from the at least one client configurable component to determine the validity of a password.

6. A system according to any of claims 5, wherein the authentication service is enabled to receive payment from the operator of the telephone link for each password request and to forward a proportion of the payment to the client.

7. A method of controlling user access to secured chargeable content on a hosted website comprising the steps of:
configuring settings for access to a secured web page or content on a website area that is password protected;
receiving a request from a consumer for access to a secured web page or content;
displaying instructions to the consumer for obtaining an access password, including a telephone number for a remote authentication service provider from which to obtain the access password;
receiving a password from the consumer;
requesting validation of the received password from the remote authentication service provider; and
granting the consumer access to the secured web page or content in dependence on the configured settings once the password has been validated.

8. A method according to claim 7, further comprising the step of transmitting the website location and the access configuration settings to the remote authentication service provider.

9. A method according to claim 7 or claim 8, further comprising the step of receiving payment from the remote authentication service provider in respect of each access password request made by a consumer.

10. A method of controlling user access to secured chargeable content on a client website hosted by a web server in which a remote authentication service provider performs the steps of:
receiving a code from a consumer over a telephone link;
accessing a database to obtain configuration settings for the website location;
generating an access password in dependence on the received code and the configuration settings;
sending the access password to the consumer over the telephone link;
receiving a request from a configurable component on the web server to validate a password received by the client website from the consumer;
comparing the received password with the access password; and
validating the received password to the configurable component if the two passwords are the same.

11. A method according to claim 10, further comprising the step of receiving payment from the operator of the telephone link for each access password request received from a consumer.

12. A method according to claim 11, further comprising the step of forwarding a proportion of the payment to the owner of the client website.

13. A system according to claim 5 or claim 6 or a method according to any of claims 10 to 12, wherein the code comprises a text string sent by a Short Messaging Service (SMS) over the telephone link.

14. A system according to any of claims 5, 6 or 13 or a method according to any of claims 10 to 13, wherein the access password is sent by a Short Messaging Service (SMS) over the telephone link.
